(19) Europäisches Patentamt
European Patent Office
Office européen des brevets

(11) EP 1 909 136 A2

(12) **EUROPÄISCHE PATENTANMELDUNG**

(43) Veröffentlichungstag:
09.04.2008 Patentblatt 2008/15

(51) Int Cl.:
*G02F 1/1337* (2006.01)    *G02B 27/28* (2006.01)
*G02B 5/30* (2006.01)

(21) Anmeldenummer: 07018812.3

(22) Anmeldetag: 25.09.2007

(84) Benannte Vertragsstaaten:
AT BE BG CH CY CZ DE DK EE ES FI FR GB GR
HU IE IS IT LI LT LU LV MC MT NL PL PT RO SE
SI SK TR
Benannte Erstreckungsstaaten:
AL BA HR MK RS

(30) Priorität: 28.09.2006 DE 102006046264

(71) Anmelder: Giesecke & Devrient GmbH
81677 München (DE)

(72) Erfinder:
• Hoffmüller, Winfried, Dr.
83646 Bad Tölz (DE)
• Burchard, Theodor, Dr.
83703 Gmund (DE)
• Pillo, Thorsten, Dr.
83626 Valley (DE)

(54) **Belichtungsstation**

(57) Die Erfindung betrifft eine Belichtungsstation (10) für die Erzeugung unterschiedlich strukturierter Bereiche in einer Photoalignment-Schicht (12) für flüssigkristalline Materialien, mit

- zumindest einer UV-Strahlungsquelle (20) zur Belichtung eines mit einer Photoalignment-Schicht (12) versehenen Trägers (14),

- einer im Strahlengang zwischen der zumindest einen UV-Strahlungsquelle (20) und der Photoalignment-Schicht (12) angeordneten Polarisationseinrichtung (30), welche zumindest eine erste Reflektorplatte (32) mit einer dichroitischen Beschichtung (34) zur Reflexion von linear polarisierter UV-Strahlung aufweist, und die so angeordnet ist, dass die UV-Strahlung (24) im Wesentlichen im Brewster-Winkel auf die dichroitische Beschichtung (34) der Reflektorplatte (32) einfällt und dadurch als linear polarisierte Strahlung (26) reflektiert wird, und

- einer im Strahlengang zwischen der Polarisationseinrichtung (30) und der Photoalignment-Schicht (12) angeordneten Maskeneinrichtung (40) zur strukturierten Beleuchtung der Photoalignment-Schicht (12) mit der linear polarisierten UV-Strahlung (26).

Fig. 1

EP 1 909 136 A2

**Beschreibung**

Die Erfindung betrifft eine Belichtungsstation, insbesondere eine Belichtungsstation für die Erzeugung unterschiedlich strukturierter Bereiche in einer Photoalignment-Schicht für flüssigkristalline Materials.

Viele Anwendungen von Flüssigkristallen erfordern eine kontrollierte Ausrichtung der lang gestreckten Moleküle des flüssigkristallinen Materials. Erreicht werden kann eine solche Ausrichtung beispielsweise mithilfe so genannter Photoalignment-Schichten, die vor einer Flüssigkristallschicht auf gewünschte Trägermaterialien aufgebracht werden. Die Photoalignment-Schichten bestehen beispielsweise aus linearen Photopolymeren, die durch Belichtung mit polarisierter UV-Strahlung strukturiert ausgerichtet werden können. Werden auf eine derartige Photoalignment-Schicht nematische Flüssigkristalle aufgebracht, so orientieren sich diese jeweils an der lokalen Ausrichtung der Alignmentschicht.

In der Druckschrift EP 0 611 981 A1 ist beispielsweise ein optisches Bauelement mit einem anisotropen Film vernetzter flüssigkristalliner Monomere mit lokal unterschiedlicher Orientierung der Flüssigkristallmoleküle beschrieben, bei dem der anisotrope Film eine mit der Flüssigkristallschicht in Kontakt befindliche Alignmentschicht aus einem photoorientierbaren Polymernetzwerk aufweist. Die Alignmentschicht wird durch selektive Bestrahlung mit polarisiertem UV-Licht erzeugt und die dabei induzierte Struktur durch Vernetzen fixiert.

Bei den bekannten Verfahren wird die benötigte linear polarisierte UV-Strahlung durch Durchlicht durch Folienpolarisatoren oder Prismen erzeugt. Die verwendbare Nutzlichtausbeute ist dabei jedoch gering, da ein großer Teil der Lichtleistung im Polarisator in Wärme umgewandelt wird, was vor allem im Dauerstrichbetrieb sogar zur Zerstörung des Polarisators führen kann. Insbesondere die kontinuierliche Erzeugung von polarisierter UV-Strahlung hoher Intensität ist mit bekannten Verfahren nicht oder nur bedingt möglich.

Davon ausgehend liegt der Erfindung die Aufgabe zugrunde, die Nachteile des Stands der Technik zu vermeiden. Insbesondere sollen eine Belichtungsstation der eingangs genannten Art sowie ein zugehöriges Verfahren angegeben werden, die eine kontinuierliche Bereitstellung von polarisierter UV-Strahlung für die Ausrichtung von Photoalignment-Schichten für flüssigkristalline Materialien ermöglichen.

Diese Aufgabe wird durch die Belichtungsstation mit den Merkmalen des Hauptanspruchs gelöst. Ein Verfahren zur Erzeugung unterschiedlich strukturierter Bereiche in einer Photoalignment-Schicht für flüssigkristalline Materialien sowie ein entsprechend hergestelltes Sicherheitselement sind in den nebengeordneten Ansprüchen angegeben. Weiterbildungen der Erfindung sind Gegenstand der abhängigen Ansprüche.

Gemäß der Erfindung umfasst eine gattungsgemäße Belichtungsstation

- zumindest eine UV-Strahlungsquelle zur Belichtung eines mit einer Photoalignment-Schicht versehenen Trägers,

- eine im Strahlengang zwischen der zumindest einen UV-Strahlungsquelle und der Photoalignment-Schicht angeordnete Polarisationseinrichtung, welche zumindest eine erste Reflektorplatte mit einer dichroitischen Beschichtung zur Reflexion von linear polarisierter UV-Strahlung aufweist, und die so angeordnet ist, dass die UV-Strahlung im Wesentlichen im Brewster-Winkel auf die dichroitische Beschichtung der Reflektorplatte einfällt und dadurch als linear polarisierte Strahlung reflektiert wird, und

- eine im Strahlengang zwischen der Polarisationseinrichtung und der Photoalignment-Schicht angeordnete Maskeneinrichtung zur strukturierten Beleuchtung der Photoalignment-Schicht mit der linear polarisierten UV-Strahlung.

In einer bevorzugten Ausgestaltung weist die zumindest eine erste Reflektorplatte eine Absorptionslage für die Absorption des nicht für den Belichtungsvorgang nutzbaren Strahlungsanteils auf.

Vorzugweise enthält die Polarisationseinrichtung eine Vielzahl erster Reflektorplatten, die zweckmäßig mit ihren Längsachsen parallel zueinander angeordnet sind. Die Orientierung der Längsachsen der ersten Reflektorplatten ist dabei mit Vorteil mittels Lamellentechnik gemeinsam ausrichtbar.

Die ersten Reflektorplatten weisen gemäß einer bevorzugten Ausgestaltung der Erfindung eine Vorderseite mit der dichroitischen Beschichtung und eine Rückseite mit einer nicht polarisiert reflektierenden Beschichtung auf, und sind so angeordnet, dass die reflektierende Beschichtung einer ersten Reflektorplatte die einfallende UV-Strahlung zur dichroitischen Beschichtung einer benachbarten ersten Reflektorplatte hin reflektiert.

Nach einer anderen ebenfalls vorteilhaften Ausgestaltung weist die Polarisationseinrichtung neben der zumindest einen ersten Reflektorplatte zumindest eine zweite, nicht polarisiert reflektierende Reflektorplatte auf, wobei die erste und zweite Reflektorplatte so aufeinander ausgerichtet sind, dass die zweite Reflektorplatte die einfallende UV-Strahlung zur dichroitischen Beschichtung der ersten Reflektorplatte hin reflektiert. Die zumindest eine zweite Reflektorplatte weist dabei zweckmäßig eine Absorptionslage für die Absorption des nicht für den Belichtungsvorgang nutzbaren Strahlungsanteils auf.

Vorzugsweise enthält die Polarisationseinrichtung sogar eine Vielzahl erster und zweiter Reflektorplatten, wobei die ersten und zweiten Reflektorplatten zweckmäßig mit ihren Längsachsen parallel zueinander angeordnet sind. Die Orientierung der Längsachsen der ersten und/ oder zweiten Reflektorplatten ist dabei mit Vorteil mittels Lamellentechnik jeweils gemeinsam ausrichtbar.

Das Spektrum der zumindest einen UV-Strahlungsquelle liegt vorzugsweise im Wesentlichen nur in dem für die Ausrichtung der Photoalignment-Schicht geeigneten Wellenlängenbereich. Die zumindest eine UV-Strahlungsquelle ist in einer vorteilhaften Ausgestaltung durch UV-Leuchtdioden, insbesondere mit einer Wellenlänge unterhalb von 300 nm, gebildet. In einer anderen ebenfalls vorteilhaften Ausgestaltung ist die zumindest eine UV-Strahlungsquelle durch UV-Blitzlampen, UV-Flächenstrahler oder eine Kombination dieser Elemente gebildet.

Besonders große Vorteile bietet die Erfindung bei Belichtungsstationen, bei denen die zumindest eine UV-Strahlungsquelle eine Dauerstrichquelle ist.

Der Brechungsindex der für die UV-Reflexion maßgeblichen Schichten der dichroitischen Beschichtung der Reflektorplatte ist mit Vorteil so gewählt, dass eine für die Ausrichtung der Photoalignment-Schicht ausreichende lineare Polarisation der reflektierten Strahlung vorliegt.

Weiter kann eine Abschirmeinrichtung vorgesehen sein, die die Strahlung der UV-Strahlungsquelle von den Bereichen der Polarisationseinrichtung abschirmt, die sich nicht im Belichtungsbereich befinden. Eine solche Abschirmeinrichtung ist mit Vorteil reflektiv ausgebildet.

Besonders bevorzugt ist die Maskeneinrichtung der Belichtungsstation auf die strukturierte Beleuchtung der Photoalignment-Schicht im Rolle-zu-Rolle-Prozess ausgelegt und eingerichtet.

Dazu kann die Maskeneinrichtung insbesondere durch eine UV-transparente Maske oder Walze mit einem aufgebrachten, insbesondere aufgedruckten, UV-undurchlässigen Motiv gebildet sein. Die Maskeneinrichtung kann alternativ auch durch eine in Motivform auf die Rückseite des Trägers der Photoalignment-Schicht aufgebrachte Beschichtung gebildet sein, die zumindest teilweise UV-reflektierend oder UV-absorbierend ist. Eine weitere vorteilhafte Möglichkeit besteht darin, die Maskeneinrichtung durch eine Belichtungsmaskenfolie auszubilden, die nur während eines kurzen Belichtungsvorgangs in Kontakt mit der Photoalignment-Schicht steht.

In einer Weiterbildung der erfindungsgemäßen Belichtungsstation wird die UV-Strahlung durch ein flüssiges Medium geleitet. Das flüssige Medium kann dabei zwischen zwei Glas- oder Quarzplatten geleitet werden, wobei mit Vorteil eine der beiden Platten von der dichroitisch beschichteten ersten Reflektorplatte gebildet ist. Das flüssige Medium enthält dabei vorteilhaft Farbstoffe und/oder Pigmente, insbesondere IR-absorbierende Pigmente. In einer besonderen Ausgestaltung enthält das flüssige Medium ein für UV-Strahlung transparentes, optisch aktives Material, das eine Drehung der Polarisationsrichtung linear polarisierter UV-Strahlung bewirkt.

Bei einer anderen Weiterbildung weist die Belichtungsstation eine magnetooptische oder elektrooptische Zelle zur Drehung der Polarisationsrichtung der linear polarisierten UV-Strahlung auf.

Die Belichtungsstation kann neben der zumindest einen UV-Strahlungsquelle für die Belichtung der Alignmentschicht eine weitere UV-Strahlungsquelle zur Vernetzung der Photoalignment-Schicht aufweisen.

In einer konkreten Ausgestaltung ist die Belichtungsstation auf die Erzeugung unterschiedlich strukturierter Bereiche in Photoalignment-Schichten aus Polyvinylcinnamat ausgelegt und eingerichtet.

Die Erfindung umfasst neben der Belichtungsstation auch ein Verfahren zur Erzeugung unterschiedlich strukturierter Bereiche in einer Photoalignment-Schicht für flüssigkristalline Materialien, bei dem

- ein Träger mit der Photoalignment-Schicht für flüssigkristalline Materialien beschichtet wird,

- zumindest eine UV-Strahlungsquelle zur Belichtung des beschichteten Trägers bereitgestellt wird,

- im Strahlengang zwischen der zumindest einen UV-Strahlungsquelle und dem beschichteten Träger eine Polarisationseinrichtung angeordnet wird, welche zumindest eine erste Reflektorplatte mit einer dichroitischen Beschichtung zur Reflexion von linear polarisierter UV-Strahlung aufweist, und die so angeordnet wird, dass einfallende UV-Strahlung im Wesentlichen im Brewster-Winkel reflektiert wird,

- im Strahlengang zwischen der Polarisationseinrichtung und der Photoalignment-Schicht eine Maskeneinrichtung angeordnet wird, und

- der mit der Photoalignment-Schicht beschichtete Träger durch die Maskeneinrichtung strukturiert mit linear polarisierter UV-Strahlung beleuchtet wird.

Der beschichtete Träger wird dabei in einer bevorzugten Verfahrensvariante mit Strahlung einer UV-Leuchtdiode, insbesondere einer Wellenlänge von 300 nm oder weniger, beleuchtet.

Besondere Vorteile bietet das erfindungsgemäße Verfahren, wenn der beschichtete Träger mit Dauerstrichstrahlung beleuchtet wird.

Das erfindungsgemäße Verfahren wird mit Vorteil kontinuierlich im Rolle-zu-Rolle-Prozess durchgeführt. Dabei wird zweckmäßig als Maskeneinrichtung ein UV-transparenter Zylinder mit einer zumindest teilweise UV-undurchlässigen Maske eingesetzt, und der die Maske tragende Zylinder vorteilhaft im zu beleuchtenden Bereich in direkten Kontakt mit dem beschichteten Träger gebracht. Mit Vorteil wird der beschichtete Träger aus dem Inneren des die Maske tragenden Zylinders heraus beleuchtet.

Nach einer anderen vorteilhaften Verfahrensvariante wird als Maskeneinrichtung auf die Rückseite des Trägers der Photoalignment-Schicht eine Beschichtung in Motivform aufgebracht, die zumindest teilweise UV-reflektierend oder UV-absorbierend ist.

Bei einer weiteren vorteilhaften Verfahrensvariante wird als Maskeneinrichtung eine ebene Belichtungsmaske eingesetzt, und der beschichtete Träger wird mit einer UV-Blitzlampe beleuchtet, deren Blitzfolge mit dem Vorschub des Trägers gekoppelt ist.

Der Träger wird vorzugsweise mit einer Photoalignment-Schicht aus Polyvinylcinnamat beschichtet, zweckmäßig in einer Dicke von etwa 40 nm bis etwa 500 nm. Die Photoalignment-Schicht wird vorteilhaft durch ein Tiefdruckverfahren, Curtaincoating oder ein anderes zum Verdrucken von Materialien mit niedriger Viskosität geeignetes Verfahren auf den Träger aufgebracht.

Die Erfindung enthält weiter ein Sicherheitselement für Sicherheitspapiere, Wertdokumente und dergleichen mit einer ausgerichteten Flüssigkristallschicht, das mittels der Belichtungsstation der beschriebenen Art oder nach dem beschriebenen Verfahren hergestellt ist.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:

Fig. 1    eine schematische Darstellung einer erfindungsgemäßen Belichtungsstation für die Erzeugung unterschiedlich strukturierter Bereiche in einer Photoalignment-Schicht für flüssigkristalline Materialien,

Fig. 2    in (a) eine besonders vorteilhafte Gestaltung einer erfindungsgemäßen Polarisationseinrichtung und in (b) eine Detaildarstellung zweier Reflektorplatten der Polarisationseinrichtung,

Fig. 3    die Einstellung der Polarisationsrichtung der UV-Strahlung durch die Ausrichtung der Längsachsen der Reflektorplatten, und

Fig. 4    eine weitere vorteilhafte Gestaltung einer erfindungsgemäßen Polarisationseinrichtung, die nur eine Sorte von Reflektorplatten aufweist.

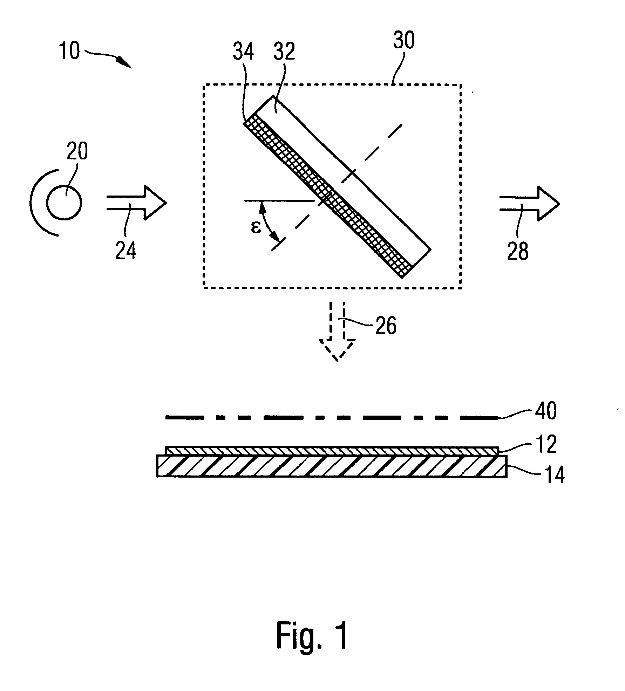

Fig. 1 zeigt schematisch das Grundprinzip einer erfindungsgemäßen Belichtungsstation 10 für die Erzeugung unterschiedlich strukturierter Bereiche in einer Photoalignment-Schicht 12 für flüssigkristalline Materialien. Die Photoalignment-Schicht 12 ist beispielsweise durch eine 40 nm bis 500 nm dicke Polyvinylcinnamat-Schicht gebildet, die auf eine senkrecht zur Papierebene laufende Trägerfolie 14, wie etwa eine PET-Folie, im Tiefdruck aufgebracht ist.

Die Belichtungsstation 10 umfasst zumindest eine UV-Strahlungsquelle 20, beispielsweise einen Quecksilber(Hg)-Strahler, deren emittierte Strahlung 24 im Allgemeinen neben der verwendbaren UV-Strahlung auch Strahlungsanteile im sichtbaren und infraroten Spektralbereich enthält. Nutzbar für die Ausrichtung der Photoalignment-Schicht 12 ist allerdings lediglich der in einer gewünschten Richtung linear polarisierte ultraviolette Anteil der emittierten Strahlung 24.

Um den gewünschten Strahlungsanteil aus der Gesamtstrahlung 24 zu erhalten, ist eine erfindungsgemäße Polarisationseinrichtung 30 im Strahlengang zwischen der Strahlungsquelle 20 und der Alignmentschicht 12 angeordnet, deren Aufbau weiter unten genauer erläutert wird.

Weiter ist für die Strukturierung der Alignmentschicht 12 im Strahlengang zwischen der Polarisationseinrichtung 30 und der Alignmentschicht 12 eine Maskeneinrichtung 40 angeordnet. Die Maskeneinrichtung 40 kann je nach der konkreten Realisierung der Belichtungsstation beispielsweise durch einen UV-transparenten Zylinder mit einer aufgebrachten, teilweise UV-undurchlässigen Maske oder, wie in der schematischen Darstellung der Fig. 1 dargestellt, durch eine ebene Belichtungsmaske gebildet sein. In manchen Ausgestaltungen kann die Maskeneinrichtung 40 auch eine in Motivform auf die Rückseite der Trägerfolie 14 aufgebrachte, UV-reflektierende oder UV-absorbierende Beschichtung enthalten. Die Belichtung der Alignmentschicht 12 erfolgt in diesem Fall von der Rückseite der Trägerfolie 14 durch die Motiv bildende Beschichtung und die Trägerfolie hindurch.

Um die Wärmebelastung des Polarisators gering zu halten, weist die Polarisationseinrichtung 30 nach der Erfindung zumindest eine Quarzplatte 32 mit einer dichroitischen Beschichtung 34 auf, die linear polarisierte UV-Strahlung einer gewünschten Polarisationsrichtung reflektiert und den Strahlungsanteil aus dem sichtbaren (VIS) und infraroten (IR) Spektralbereich weitgehend transmittiert.

Um eine ausreichende Diskriminierung zwischen Strahlungsanteilen aus dem IR/VIS- und UV-Spektralbereich zu erzielen, werden bevorzugt dichroitische Beschichtungen eingesetzt, deren Transmission im IR/VIS-Spektralbereich typischerweise größer 80 % und im UV-Spektralbereich typischerweise kleiner 80 % ist. Dem Fachmann sind dichroitische Beschichtungen bekannt, die die vorstehend angegebenen Transmissionseigenschaften aufweisen.

Die Quarzplatte 32 ist zusätzlich so angeordnet, dass die einfallende Strahlung 24 im Wesentlichen im Brewster-Winkel $\varepsilon$ auf die dichroitische Beschichtung 34 der Quarzplatte 32 trifft, wobei selbstverständlich der Brewster-Winkel für den interessierenden ultravioletten Spektralbereich maßgeblich ist. Die reflektierte UV-Strahlung 26 ist nach dem Brewsterschen Gesetz dann im Wesentlichen vollständig linear polarisiert.

Bezeichnen $n_1$ und $n_2$ die Brechzahlen der aneinandergrenzenden Medien, hier von Luft und der dichroitischen Beschichtung 34 der Quarzplatte 32, so wird unpolarisiertes Licht, das unter dem Brewster-Winkel $\varepsilon$ auf die Grenzfläche auftrifft, in einen polarisierten reflektierten Strahl und einen unpolarisierten gebrochenen Strahl geteilt. Nach dem Brewsterschen Gesetz tritt dieser Fall gerade dann ein, wenn die Beziehung

$$\tan \varepsilon = n_2/n_1$$

erfüllt ist, was bei gegebenen Brechzahlen $n_1$ und $n_2$ den Brewster-Winkel $\varepsilon$ definiert. Wie oben erwähnt, werden für die Bestimmung des relevanten Brewster-Winkels natürlich die Brechzahlen $n_1$ und $n_2$ im interessierenden ultravioletten Spektralbereich verwendet.

Haben z. B. die Brechungsindices $n_1$ und $n_2$ bei einer bestimmten Wellenlänge $\lambda$ den Wert 1 (Luft) und 1,5517 (Beschichtung), so errechnet sich daraus ein Brewster-Winkel von 57,2°. Der Fachmann kann sich demnach aus Tabellen die Brechungsindices $n_1$ und $n_2$ bei einer bestimmten Wellenlänge $\lambda$ der einfallenden Strahlung 24 beschaffen und den sich daraus ergebenden Brewster-Winkel $\varepsilon$ berechnen.

Aus dem vorgenannten Zahlenbeispiel wird ferner ersichtlich, dass auf die dichroitische Beschichtung 34 auch ganz verzichtet werden kann, da auch z. B. Glas mit einem Brechungsindex von ca. 1,55 zur Erzeugung linear polarisierten Lichts geeignet ist. Wenngleich der Einsatz einer Quarzplatte 32 ohne dichroitische Beschichtung also grundsätzlich denkbar ist, ist eine solche Anordnung gegenwärtig nicht bevorzugt, da eine erfindungsgemäße Reflektorplatte mit dichroitischer Beschichtung einen größeren Variationsspielraum im Hinblick auf den einzustellenden Brewster-Winkel bietet und auch der für die reflektierte Strahlung 26 erzielbare Polarisationsgrad höher ist.

Durch die Anordnung der Quarzplatte 32 wird die reflektierte Strahlung 26, die nun im Wesentlichen nur noch linear polarisierte UV-Strahlung enthält, zur Alignmentschicht 12 gelenkt. Die UV-Strahlung der dazu senkrechten Polarisationsrichtung tritt ebenso wie der sichtbare und der infrarote Strahlungsanteil durch die Quarzplatte 32 hindurch (Strahlungsanteil 28). Es versteht sich, dass die Belichtungsstation 10 und insbesondere die Polarisationseinrichtung 30 weitere optische Elemente enthalten können, um die linear polarisierte Strahlung 26 zur Alignmentschicht 12 zu führen. Insbesondere können vor oder nach der dichroitisch beschichteten Quarzplatte geeignete Spiegel zur Strahlführung vorgesehen sein.

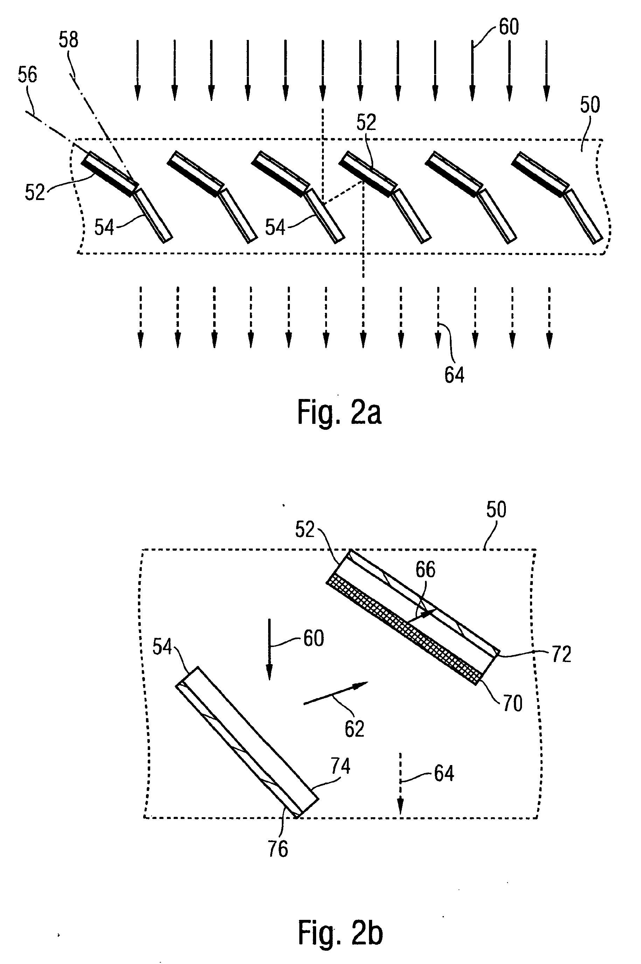

Eine besonders vorteilhafte Gestaltung einer erfindungsgemäßen Polarisationseinrichtung 50 ist in Fig. 2 gezeigt. Die Polarisationseinrichtung 50 umfasst eine Vielzahl erster Reflektorplatten 52 sowie eine Vielzahl zweiter Reflektorplatten 54, die mit ihren Längsachsen 56 bzw. 58 jeweils parallel zueinander angeordnet sind. Von der in der Darstellung der Fig. 2(a) von oben einfallenden Strahlung 60 wird durch die Polarisationseinrichtung 50 lediglich ein linear polarisierter ultravioletter Strahlungsanteil 64 mit einer vorbestimmten Polarisationsrichtung zur selbst nicht gezeigten Maskeneinrichtung und zur Alignmentschicht hin durchgelassen.

Wie am besten in der Detaildarstellung zweier Reflektorplatten in Fig. 2(b) zu erkennen ist, sind die ersten Reflektorplatten 52 dazu auf ihrer Vorderseite jeweils mit einer dichroitischen Beschichtung 70 und auf ihrer Rückseite mit einer absorbierenden Beschichtungslage 72 versehen. Die zweiten Reflektorplatten 54 sind auf ihrer Vorderseite 74 verspiegelt und auf ihrer Rückseite ebenfalls mit einer absorbierenden Beschichtung 76 versehen.

Die einfallende Strahlung 60 wird nun zunächst an der verspiegelten Vorderseite 74 der zweiten Reflektorplatten 54 nicht polarisiert reflektiert und zur dichroitisch beschichteten Vorderseite 70 der ersten Reflektorplatten 52 hin gespiegelt. Die ersten und zweiten Reflektorplatten 52, 54 sind dabei so zueinander angeordnet, dass die von den zweiten Reflektorplatten 54 gespiegelte Strahlung 62 gerade im Brewster-Winkel $\varepsilon$ auf die dichroitische Beschichtung 70 der ersten Reflektorplatten 52 auftrifft. Von der auf die ersten Reflektorplatten 52 auftreffenden Strahlung 62 wird daher, wie oben erläutert, nur der linear polarisierte UV-Strahlungsanteil 64 zur Maskeneinrichtung und zur Alignmentschicht hin reflektiert.

Der restliche Strahlungsanteil 66 wird von der dichroitischen Beschichtung 70 transmittiert und in der absorbierenden Beschichtungslage 72 absorbiert. Auch die einfallende Strahlung 60, die nicht oder nicht im richtigen Winkel auf die verspiegelte Vorderseite 74 einer zweiten Reflektorplatte 54 auftrifft, wird von einer absorbierenden Beschichtung 72 oder 76 einer ersten Reflektorplatte 52 oder einer zweiten Reflektorplatte 54 absorbiert.

Die erfindungsgemäße Gestaltung erlaubt die räumliche Trennung von Polarisation und Absorption des nicht erwünschten Strahlungsanteils. Eine übermäßige Aufheizung des Polarisators, hier der dichroitischen Beschichtung 70, wird dadurch wirksam vermieden. Falls notwendig oder erwünscht, kann die in den Absorptionslagen 72, 76 deponierte Wärme durch geeignete Kühlmaßnahmen reduziert oder abgeführt werden.

Die ersten bzw. zweiten Reflektorplatten 52, 54 können mittels Lamellentechnik jeweils gemeinsam gegeneinander gedreht und vertikal verschoben werden. Dadurch lässt sich zum einen die gewünschte lineare Polarisationsrichtung der UV-Strahlung auf der Alignmentschicht einstellen, zum anderen kann durch die gegenseitige Ausrichtung der ersten und zweiten Reflektorplatten 52, 54 die Reflexion im Brewster-Winkel sehr genau eingestellt und so ein fast vollständiger Polarisationsgrad der Nutzstrahlung 64 erreicht werden.

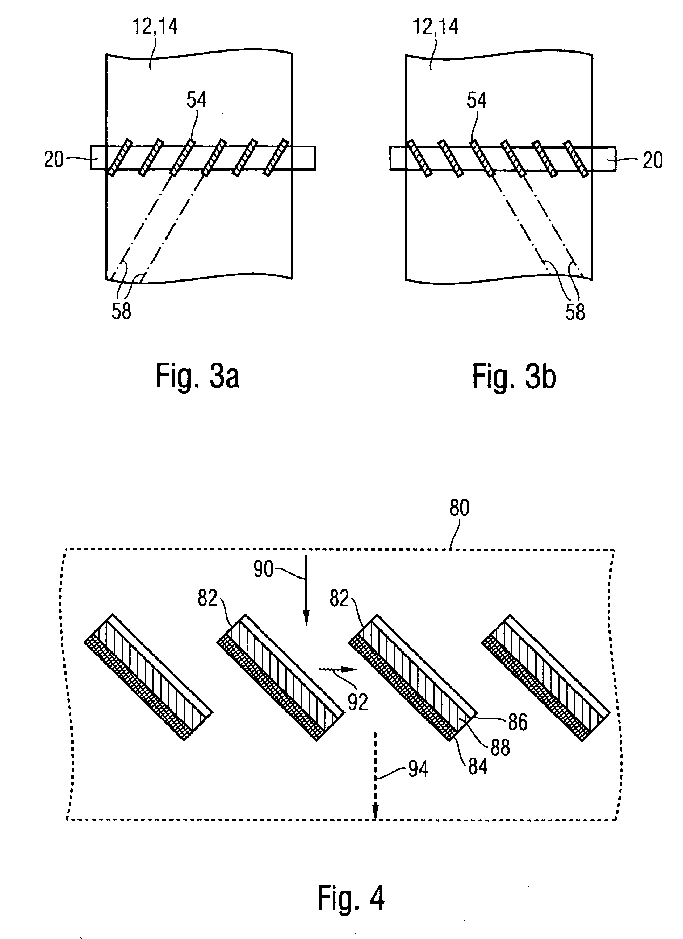

Fig. 3 illustriert die Einstellung der Polarisationsrichtung der UV-Strahlung durch die Ausrichtung der Längsachsen der Reflektorplatten. Gezeigt ist eine Aufsicht auf eine mit einer Photoalignment-Schicht 12 beschichtete Folienbahn 14, eine UV-Strahleranordnung 20 und parallel ausgerichtete zweite Reflektorplatten 54. Der übersichtlicheren Darstellung halber sind in Fig. 3 die ersten Reflektorplatten 52 nicht dargestellt. Ihre Position ergibt sich jedoch aus der Position und Lage der zweiten Reflektorplatten 54 aus der Forderung nach einem möglichst vollständigen Polarisationsgrad.

Wie in Fig. 3(a) zu erkennen, sind alle zweiten Reflektorplatten 54 mit ihren Längsachsen 58 parallel zueinander ausgerichtet. Dabei definiert die Lage der Längsachsen 58 relativ zur laufenden Bahn 12, 14 eine erste Ausrichtungsrichtung der Photoalignment-Schicht 12. Werden die zweiten Reflektorplatten 54 zusammen mit den nicht gezeigten ersten Reflektorplatten 52 in Lamellentechnik mit ihren Längsachsen 58 bzw. 56 gemeinsam in eine andere Lage verschwenkt, wie in Fig. 3(b) gezeigt, so wird bei einem nachfolgenden Belichtungsschritt eine zweite Ausrichtungsrichtung der Alignmentschicht entsprechend der neuen Lage der Reflektorplatten 52 und 54 erzielt.

Fig. 4 zeigt eine weitere vorteilhafte Gestaltung einer erfindungsgemäßen Polarisationseinrichtung 80, die nur eine Sorte von Reflektorplatten aufweist. Die Polarisationseinrichtung 80 weist eine Vielzahl von Reflektorplatten 82 auf, die mit ihren Längsachsen parallel zueinander angeordnet sind. Die Reflektorplatten 82 tragen auf ihrer Vorderseite jeweils eine dichroitische Beschichtung 84 und sind auf ihrer Rückseite 86 verspiegelt. Zwischen der Verspiegelung und der dichroitischen Beschichtung ist eine absorbierende Beschichtungslage 88 vorgesehen.

Die Reflektorplatten 82 sind nun so angeordnet, dass einfallende Strahlung 90 zunächst an der verspiegelten Rückseite 86 der Reflektorplatten 82 nichtpolarisiert reflektiert und zur dichroitisch beschichteten Vorderseite 84 einer benachbarten Reflektorplatte 82 hin gespiegelt wird. Durch entsprechende Ausrichtung der Längsachsen der Reflektorplatten 82 kann insbesondere erreicht werden, dass die von der Rückseite 86 gespiegelte Strahlung 92 im Wesentlichen im Brewster-Winkel auf die dichroitische Beschichtung 84 der Vorderseite der benachbarten Reflektorplatte 82 auftrifft. Von der nichtpolarisiert gespiegelten Strahlung 92 wird daher wieder nur der linear polarisierte UV-Strahlungsanteil 94 zur Maskeneinrichtung und zur Alignmentschicht hin reflektiert.

Auch bei dieser Gestaltung sind Polarisation und Absorption räumlich entkoppelt. Die absorbierende Beschichtungslage 88 kann darüber hinaus passiv oder aktiv gekühlt werden, wie weiter unten genauer beschrieben.

Die erfindungsgemäße Belichtungsstation ist besonders gut für die Motiverzeugung im Rolle-zu-Rolle-Prozess geeignet, da sich die vorgesehene Polarisationseinrichtung auch bei kontinuierlicher Strahlungsbeaufschlagung nicht übermäßig erwärmt.

Die Motiverzeugung im Rolle-zu-Rolle-Prozess kann beispielsweise durch kontinuierliche Belichtung durch einen UV-transparenten Zylinder erfolgen. Der Zylinder kann dabei aus Quarz oder einem UV-transparenten Kunststoff bestehen. Auf dem Umfang des Zylinders ist eine Motiv tragende, zumindest teilweise UV-undurchlässige Maske aufgebracht. Die Maske kann beispielsweise durch eine bebilderte Folie gebildet sein, die auf den Zylinder aufgeklebt, aufgeschrumpft oder aufgeschmolzen ist.

UV-undurchlässige Bereiche der Maske können beispielsweise dadurch gebildet werden, dass in den Bereichen, die in der fertigen Maske UV-durchlässig sein sollen, zunächst eine Waschfarbe aufgedruckt wird. Die Maskenfolie wird dann vollflächig metallisiert und anschließend die Waschfarbe zusammen mit der über ihr liegenden Metallisierung abgewaschen. Die ursprünglich mit der Waschfarbe bedruckten Bereiche bilden dann UV-transparente Bereiche in einer ansonsten UV-undurchlässigen Metallisierung. Es versteht sich, dass der Zylinder alternativ auch direkt metallisiert werden kann.

Die Photoalignment-Schicht kann tackfrei eingestellt sein, so dass ein direkter Kontakt des Zylinders mit der beschichteten Trägerfolie möglich ist. Eine gewisse Umschlingung des Zylinders mit der Folie ist für eine kantenscharfe Belichtung von Vorteil. Durch eine Blende im Inneren des Zylinders kann der Lichtaustritt auf den Folienbereich beschränkt werden, der in Kontakt mit dem Zylinder steht.

Liegt das Motiv als ebene Belichtungsmaske vor, so erfolgt die Belichtung zweckmäßig mittels einer UV-Blitzlampe, deren Blitzfolge mit dem Vorschub der Trägerfolie mit der Alignmentschicht gekoppelt ist, so dass jeweils nach einem Vorschub um eine Belichtungsmaskenlänge ein Blitz ausgelöst wird.

Die Maskeneinrichtung kann auch an der Trägerfolie selbst verwirklicht sein. Ist die Trägerfolie beispielsweise im UV-Bereich transparent und beeinflusst sie die Polarisation der Nutzstrahlung nicht nachteilig, so kann sie auf ihrer Rückseite mit einer beliebigen, im relevanten UV-Bereich reflektierenden oder absorbierenden Beschichtung, etwa einer Druckfarbe oder einer Metallisierung, versehen werden. Die UV-Belichtung erfolgt dann durch die Motiv tragende Rückseitenbeschichtung und die Trägerfolie hindurch. Bei dieser Variante kommen als Trägerfolien insbesondere Folien auf Basis cycloolefinischer Copolymere in Betracht, die die geforderten UV-Eigenschaften aufweisen.

Eine weitere Möglichkeit besteht darin, eine Belichtungsmaskenfolie während der Belichtung in direkten Kontakt mit der beschichteten Vorderseite der Trägerfolie zu bringen, beispielsweise bei der gemeinsamen Umschlingung einer Walze. Die UV-Belichtung erfolgt in diesem Fall von der Vorderseite der Trägerfolie her durch die Belichtungsmaskenfolie. Bei dieser Variante stellt der Belichtungsschritt keine besonderen Anforderungen an die Trägerfolie, da ihre UV-Transparenz und ihr Einfluss auf die Polarisation wegen der Belichtung von der Vorderseite her nicht von Bedeutung sind.

Eine weitere Temperaturkontrolle bei der UV-Bestrahlung kann auch dadurch erfolgen, dass die Strahlung einer herkömmlichen Strahlungsquelle durch ein flüssiges Medium zwischen zwei Quarzplatten geleitet wird, das als Filtereinheit wirkt. Das flüssige Medium enthält dabei geeignete Farbstoffe und/oder Pigmente, die es erlauben, die Strahlungscharakteristik der transmittierten Strahlung fast nach Belieben einzustellen. Beispielsweise können dem flüssigen Medium IR-absorbierende Pigmente beigefügt werden, die im ultravioletten Spektralbereich weitgehend transparent sind. Durch den Flüssigkeitskreislauf kann die Filtereinheit darüber hinaus gut gekühlt werden, so dass sie nicht selbst als IR-Strahlungsquelle wirkt. Der Wärmeeintrag in einen nachfolgenden Polarisator wird durch eine solche Filtereinheit wirksam reduziert.

Zwischen die Quarzplatten kann auch eine UV-transparente, optisch aktive Flüssigkeit eingebracht werden, die eine Drehung der Polarisationsrichtung linear polarisierter Strahlung bewirkt. Beispielsweise führt eine wässrige Zuckerlösung zu einer Drehung der Polarisationsrichtung des Lichts, wobei das Ausmaß der Drehung von der Konzentration und der Temperatur der Lösung abhängt. Es ist nun beispielsweise möglich, zunächst eine optisch nicht aktive Flüssigkeit zwischen den Quarzplatten strömen zu lassen und die Alignmentschicht mit der aus dem Gesamtsystem resultierenden UV-Strahlung einer ersten Polarisationsrichtung zu beaufschlagen. Nachfolgend lässt man nach einem geeigneten Abpumpschritt ein flüssiges Medium mit einer optisch aktiven Substanz durch die Platten strömen, so dass die Alignmentschicht in diesem Schritt mit UV-Strahlung einer zweiten Polarisationsrichtung beaufschlagt wird, die gegenüber der ersten Polarisationsrichtung um einen von der optischen Aktivität abhängenden Winkel $\alpha$ gedreht ist.

Eine weitere Möglichkeit zur Änderung der Polarisationsrichtung der UV-Strahlung stellen magnetooptische oder elektrooptische Effekte dar, bei denen die Polarisationsebene von polarisiertem Licht durch elektrische Felder oder durch Magnetfelder gedreht werden kann.

Die Wärmeentstehung kann nach einem weiteren Ansatzpunkt auch bereits bei der Strahlungsquelle vermieden werden. Für die Anwendung zur Erzeugung strukturierter Bereiche in Photoalignment-Schichten für flüssigkristalline Materialien eignen sich dabei insbesondere UV-Leuchtdioden mit einer Emissionswellenlänge unterhalb von 300 nm, beispielsweise auf Basis von Al-GaN-Mehrfach-Quantentopfstrukturen.

**Patentansprüche**

1.  Belichtungsstation für die Erzeugung unterschiedlich strukturierter Bereiche in einer Photoalignment-Schicht für flüssigkristalline Materialien, mit

    - zumindest einer UV-Strahlungsquelle zur Belichtung eines mit einer Photoalignment-Schicht versehenen Trägers,
    - einer im Strahlengang zwischen der zumindest einen UV-Strahlungsquelle und der Photoalignment-Schicht angeordneten Polarisationseinrichtung, welche zumindest eine erste Reflektorplatte mit einer dichroitischen Beschichtung zur Reflexion von linear polarisierter UV-Strahlung aufweist, und die so angeordnet ist, dass die UV-Strahlung im Wesentlichen im Brewster-Winkel auf die dichroitische Beschichtung der Reflektorplatte einfällt und **dadurch** als linear polarisierte Strahlung reflektiert wird, und
    - einer im Strahlengang zwischen der Polarisationseinrichtung und der Photoalignment-Schicht angeordneten Maskeneinrichtung zur strukturierten Beleuchtung der Photoalignment-Schicht mit der linear polarisierten UV-Strahlung.

2.  Belichtungsstation nach Anspruch 1, **dadurch gekennzeichnet, dass** die zumindest eine erste Reflektorplatte eine Absorptionslage für die Absorption des nicht für den Belichtungsvorgang nutzbaren Strahlungsanteils aufweist.

3.  Belichtungsstation nach Anspruch 1 oder 2, **dadurch gekennzeichnet, dass** die Polarisationseinrichtung eine Vielzahl erster Reflektorplatten aufweist.

4.  Belichtungsstation nach Anspruch 3, **dadurch gekennzeichnet, dass** die Vielzahl erster Reflektorplatten mit ihren Längsachsen parallel zueinander angeordnet ist.

5.  Belichtungsstation nach Anspruch 4, **dadurch gekennzeichnet, dass** die Orientierung der Längsachsen der ersten Reflektorplatten mittels Lamellentechnik gemeinsam ausrichtbar ist.

6.  Belichtungsstation nach wenigstens einem der Ansprüche 3 bis 5, **dadurch gekennzeichnet, dass** die ersten Reflektorplatten eine Vorderseite mit der dichroitischen Beschichtung und eine Rückseite mit einer nicht polarisiert reflektierenden Beschichtung aufweisen, und so angeordnet sind, dass die reflektierende Beschichtung einer ersten Reflektorplatte die einfallende UV-Strahlung zur dichroitischen Beschichtung einer benachbarten ersten Reflektorplatte hin reflektiert.

7.  Belichtungsstation nach wenigstens einem der Ansprüche 1 bis 5, **dadurch gekennzeichnet, dass** die Polarisationseinrichtung ferner zumindest eine zweite, nicht polarisiert reflektierende Reflektorplatte aufweist, wobei die erste und zweite Reflektorplatte so aufeinander ausgerichtet sind, dass die zweite Reflektorplatte die einfallende UV-Strahlung zur dichroitischen Beschichtung der ersten Reflektorplatte hin reflektiert.

8. Belichtungsstation nach Anspruch 7, **dadurch gekennzeichnet, dass** die zumindest eine zweite Reflektorplatte eine Absorptionslage für die Absorption des nicht für den Belichtungsvorgang nutzbaren Strahlungsanteils aufweist.

9. Belichtungsstation nach Anspruch 7 oder 8, **dadurch gekennzeichnet, dass** die Polarisationseinrichtung eine Vielzahl erster und zweiter Reflektorplatten aufweist.

10. Belichtungsstation nach Anspruch 9, **dadurch gekennzeichnet, dass** die Vielzahl erster und zweiter Reflektorplatten mit ihren Längsachsen jeweils parallel zueinander angeordnet ist.

11. Belichtungsstation nach Anspruch 10, **dadurch gekennzeichnet, dass** die Orientierung der Längsachsen der ersten und/ oder zweiten Reflektorplatten mittels Lamellentechnik jeweils gemeinsam ausrichtbar ist.

12. Belichtungsstation nach wenigstens einem der Ansprüche 1 bis 11, **dadurch gekennzeichnet, dass** das Spektrum der zumindest einen UV-Strahlungsquelle im Wesentlichen nur in dem für die Ausrichtung der Photoalignment-Schicht geeigneten Wellenlängenbereich liegt.

13. Belichtungsstation nach wenigstens einem der Ansprüche 1 bis 12, **dadurch gekennzeichnet, dass** die zumindest eine UV-Strahlungsquelle durch UV-Leuchtdioden, insbesondere mit einer Wellenlänge unterhalb von 300 nm, gebildet ist.

14. Belichtungsstation nach wenigstens einem der Ansprüche 1 bis 12, **dadurch gekennzeichnet, dass** die zumindest eine UV-Strahlungsquelle durch UV-Blitzlampen, UV-Flächenstrahler oder eine Kombination dieser Elemente gebildet ist.

15. Belichtungsstation nach wenigstens einem der Ansprüche 1 bis 14, **dadurch gekennzeichnet, dass** die zumindest eine UV-Strahlungsquelle eine Dauerstrichquelle ist.

16. Belichtungsstation nach wenigstens einem der Ansprüche 1 bis 15, **dadurch gekennzeichnet, dass** der Brechungsindex der für die UV-Reflexion maßgeblichen Schichten der dichroitischen Beschichtung der Reflektorplatte so gewählt ist, dass eine für die Ausrichtung der Photoalignment-Schicht ausreichende lineare Polarisation der reflektierten Strahlung vorliegt.

17. Belichtungsstation nach wenigstens einem der Ansprüche 1 bis 16, **dadurch gekennzeichnet, dass** eine Abschirmeinrichtung vorgesehen ist, die die Strahlung der UV-Strahlungsquelle von den Bereichen der Polarisationseinrichtung abschirmt, die sich nicht im Belichtungsbereich befinden.

18. Belichtungsstation nach Anspruch 17, **dadurch gekennzeichnet, dass** die Abschirmeinrichtung reflektiv ausgebildet ist.

19. Belichtungsstation nach wenigstens einem der Ansprüche 1 bis 18, **dadurch gekennzeichnet, dass** die Maskeneinrichtung auf die strukturierte Beleuchtung der Photoalignment-Schicht im Rolle-zu-Rolle-Prozess ausgelegt und eingerichtet ist.

20. Belichtungsstation nach Anspruch 19, **dadurch gekennzeichnet, dass** die Maskeneinrichtung durch eine UV-transparente Maske oder Walze mit einem aufgebrachten, insbesondere aufgedruckten, UV-undurchlässigen Motiv gebildet ist.

21. Belichtungsstation nach Anspruch 19, **dadurch gekennzeichnet, dass** die Maskeneinrichtung durch eine in Motivform auf die Rückseite des Trägers der Photoalignment-Schicht aufgebrachte Beschichtung gebildet ist, die zumindest teilweise UV-reflektierend oder UV-absorbierend ist.

22. Belichtungsstation nach Anspruch 19, **dadurch gekennzeichnet, dass** die Maskeneinrichtung durch eine Belichtungsmaskenfolie gebildet ist, die nur während eines kurzen Belichtungsvorgangs in Kontakt mit der Photoalignment-Schicht steht.

23. Belichtungsstation nach wenigstens einem der Ansprüche 1 bis 22, **dadurch gekennzeichnet, dass** die UV-Strahlung durch ein flüssiges Medium geleitet wird.

24. Belichtungsstation nach Anspruch 23, **dadurch gekennzeichnet, dass** das flüssige Medium zwischen zwei Glas- oder Quarzplatten geleitet wird.

25. Belichtungsstation nach Anspruch 24, **dadurch gekennzeichnet, dass** eine der beiden Platten von der dichroitisch beschichteten ersten Reflektorplatte gebildet ist.

26. Belichtungsstation nach wenigstens einem der Ansprüche 23 bis 25, **dadurch gekennzeichnet, dass** das flüssige Medium Farbstoffe und/ oder Pigmente, insbesondere IR-absorbierende Pigmente enthält.

27. Belichtungsstation nach wenigstens einem der Ansprüche 23 bis 26, **dadurch gekennzeichnet, dass** das flüssige Medium ein für UV-Strahlung transparentes, optisch aktives Material enthält, das eine Drehung der Polarisationsrichtung linear polarisierter UV-Strahlung bewirkt.

28. Belichtungsstation nach wenigstens einem der Ansprüche 1 bis 27, **dadurch gekennzeichnet, dass** die Belichtungsstation eine magnetooptische oder elektrooptische Zelle zur Drehung der Polarisationsrichtung der linear polarisierten UV-Strahlung aufweist.

29. Belichtungsstation nach wenigstens einem der Ansprüche 1 bis 28, **dadurch gekennzeichnet, dass** die Belichtungsstation eine weitere UV-Strahlungsquelle zur Vernetzung der Photoalignment-Schicht aufweist.

30. Belichtungsstation nach wenigstens einem der Ansprüche 1 bis 29, **dadurch gekennzeichnet, dass** die Belichtungsstation auf die Erzeugung unterschiedlich strukturierter Bereiche in Photoalignment-Schichten aus Polyvinylcinnamat ausgelegt und eingerichtet ist.

31. Verfahren zur Erzeugung unterschiedlich strukturierter Bereiche in einer Photoalignment-Schicht für flüssigkristalline Materialien, bei dem

- ein Träger mit der Photoalignment-Schicht für flüssigkristalline Materialien beschichtet wird,
- zumindest eine UV-Strahlungsquelle zur Belichtung des beschichteten Trägers bereitgestellt wird,
- im Strahlengang zwischen der zumindest einen UV-Strahlungsquelle und dem beschichteten Träger eine Polarisationseinrichtung angeordnet wird, welche zumindest eine erste Reflektorplatte mit einer dichroitischen Beschichtung zur Reflexion von linear polarisierter UV-Strahlung aufweist, und die so angeordnet wird, dass einfallende UV-Strahlung im Wesentlichen im Brewster-Winkel reflektiert wird,
- im Strahlengang zwischen der Polarisationseinrichtung und der Photoalignment-Schicht eine Maskeneinrichtung angeordnet wird, und
- der mit der Photoalignment-Schicht beschichtete Träger durch die Maskeneinrichtung strukturiert mit linear polarisierter UV-Strahlung beleuchtet wird.

32. Verfahren nach Anspruch 31, **dadurch gekennzeichnet, dass** der beschichtete Träger mit Strahlung einer UV-Leuchtdiode, insbesondere einer Wellenlänge von 300 nm oder weniger, beleuchtet wird.

33. Verfahren nach Anspruch 31 oder 32, **dadurch gekennzeichnet, dass** der beschichtete Träger mit Dauerstrichstrahlung beleuchtet wird.

34. Verfahren nach wenigstens einem der Ansprüche 31 bis 33, **dadurch gekennzeichnet, dass** das Verfahren kontinuierlich im Rolle-zu-Rolle-Prozess durchgeführt wird.

35. Verfahren nach Anspruch 34, **dadurch gekennzeichnet, dass** als Maskeneinrichtung ein UV-transparenter Zylinder mit einer zumindest teilweise UV-undurchlässigen Maske eingesetzt wird.

36. Verfahren nach Anspruch 35, **dadurch gekennzeichnet, dass** der die Maske tragende Zylinder im zu beleuchtenden Bereich in direkten Kontakt mit dem beschichteten Träger gebracht wird.

37. Verfahren nach Anspruch 35 oder 36, **dadurch gekennzeichnet, dass** der beschichtete Träger aus dem Inneren des die Maske tragenden Zylinders heraus beleuchtet wird.

38. Verfahren nach wenigstens einem der Ansprüche 31 bis 33, **dadurch gekennzeichnet, dass** als Maskeneinrichtung auf die Rückseite des Trägers der Photoalignment-Schicht eine Beschichtung in Motivform aufgebracht wird, die zumindest teilweise UV-reflektierend oder UV-absorbierend ist.

39. Verfahren nach wenigstens einem der Ansprüche 31 bis 33, **dadurch gekennzeichnet, dass** als Maskeneinrichtung eine ebene Belichtungsmaske eingesetzt wird, und der beschichtete Träger mit einer UV-Blitzlampe beleuchtet wird, deren Blitzfolge mit dem Vorschub des Trägers gekoppelt ist.

40. Verfahren nach wenigstens einem der Ansprüche 31 bis 39, **dadurch gekennzeichnet, dass** der Träger mit einer Photoalignment-Schicht aus Polyvinylcinnamat beschichtet wird.

41. Verfahren nach wenigstens einem der Ansprüche 31 bis 40, **dadurch gekennzeichnet, dass** der Träger mit einer etwa 40 nm bis etwa 500 nm dicken Photoalignment-Schicht beschichtet wird.

42. Verfahren nach wenigstens einem der Ansprüche 31 bis 41, **dadurch gekennzeichnet, dass** die Photoalignment-Schicht durch ein Tiefdruckverfahren, Curtaincoating oder ein anderes zum Verdrucken von Materialien mit niedriger Viskosität geeignetes Verfahren auf den Träger aufgebracht wird.

43. Sicherheitselement für Sicherheitspapiere, Wertdokumente und dergleichen mit einer ausgerichteten Flüssigkristallschicht, **dadurch gekennzeichnet, dass** es mittels der Belichtungsstation nach einem der Ansprüche 1 bis 30 oder nach dem Verfahren eines der Ansprüche 31 bis 42 hergestellt ist.

Fig. 1

Fig. 2a

Fig. 2b

Fig. 3a

Fig. 3b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0611981 A1